# EUROPÄISCHE PATENTSCHRIFT

(11) **EP 1 036 028 B1**
(45) Veröffentlichungstag und Bekanntmachung des Hinweises auf die Patenterteilung: **19.12.2001**
(21) Anmeldenummer: 98961113.2
(22) Anmeldetag: 30.10.1998
(51) Int. Cl.: B65H 67/06, B65H 75/18, G06K 19/077

(54) **SPUL-MANSCHETTE MIT TRANSPONDER, INSBESONDERE ZUM SPINNSPULEN VON GLASFASERN**
SPOOL SLEEVE WITH A TRANSPONDER, ESPECIALLY FOR GLASS FIBER SPINNING BOBBINS
MANCHETTE DE BOBINAGE A TRANSPONDEUR, NOTAMMENT POUR LE FILAGE SUR BOBINE DE FIBRES DE VERRE

(30) Priorität: 03.11.1997 DE 29719432 U
(43) Veröffentlichungstag der Anmeldung: 20.09.2000
(73) Patentinhaber: Wibmer GmbH u. Co. Kommanditgesellschaft Papier - Formtechnik, 72125 Pliezhausen (DE)
(72) Erfinder: WIBMER, Albert, D-72760 Reutlingen (DE)
(74) Vertreter: Wolff, Michael, Dipl.-Phys.
(86) Internationale Anmeldenummer: EP9806884
(87) Internationale Veröffentlichungsnummer: WO9923024

(56) Entgegenhaltungen:
- EP-A- 0 170 094
- EP-A- 0 398 301
- CH-A- 686 156
- DE-A- 3 732 367
- DE-A- 4 231 059
- "COVERED TEXTILE TUBES" RESEARCH DISCLOSURE, Nr. 340, 1. August 1992, Seite 646 XP000328922
- PATENT ABSTRACTS OF JAPAN vol. 017, no. 445 (P-1593), 16. August 1993 -& JP 05 094568 A (FUJI ELECTRIC CO LTD), 16. April 1993

## Beschreibung

Die Erfindung betrifft eine Spul-Manschette der im Oberbegriff des Anspruches 1 genannten Gattung, wie sie zum Beispiel aus der EP 0.170.094 B2 (Wibmer) bekannt ist, wo gewickelte Bahnen verklebt sind.
Bei solchen Manschetten wird bei ihrer Herstellung ein Strichcode, mit Klartext daneben, beidseitig auf einen Manschettenrand aufgebracht. Dieser mehrstellige Strichcode dient zur Kennzeichnung der Manschette und beinhaltet die Herstellungsdaten des Wickels auf der Manschette.
Dabei kommt es regelmäßig vor, daß diese optische Kennzeichnung unter einer Schmutzschicht oder nach Beschädigung, welche beim mehrmals wiederholten Gebrauch der Manschette auftreten können, nicht mehr mit dem Auge beziehungsweise einem Strichcode-Lesekopf (Scanner) gelesen werden kann. Die Manschette muß dann gegen eine neue ausgewechselt werden, obwohl sie um ein Vielfaches häufiger wiederverwendet werden könnte.
Der Erfindung liegt daher die Aufgabe zugrunde, diesen Nachteil zu vermeiden und eine gattungsgleiche Manschette zu schaffen, die größenordnungsmäßig zehn Mal so oft erneut gebraucht werden kann, ohne daß auf die Kennzeichnung der Manschette und ihre deshalb mögliche Identifizierung verzichtet werden muß.
Diese Aufgabe ist erfindungsgemäß durch die kennzeichnenden Merkmale des Anspruches 1 gelöst. Der Transponder (mikroelektronischer Datenträger) zur elektronischen Identifizierung der Manschette anhand der in ihm gespeicherten individuellen Kennzeichnung, die mittels handhabbarer oder stationärer elektronischer Lesegeräte abgefragt wird, erfordert keine Sichtverbindung zwischen Manschettenoberfläche und Auge (bei Zahl) beziehungsweise Lesekopf (bei Strichcode), kann also unter die Manschettenoberfläche versenkt sein, zumal die Signalübertragung zwischen Transponder und Lesegerät drahtlos per Funk erfolgt, wobei die Versorgung des batterielosen Transponders durch das elektromagnetische Feld des Lesegerätes geschieht.
Infolgedessen unterliegt die im Transponder gespeicherte, auf Abruf zum Lesegerät übertragbare Kennzeichnung der Manschette bei deren häufigem Gebrauch keinerlei Abnutzung, so daß allein die Materialbeständigkeit der Manschette deren Verwendungsdauer bestimmt.

Zweckmäßige Ausgestaltungen der erfindungsgemäßen Manschette sind in den Ansprüchen 2 bis 5 charakterisiert.
Die Erfindung ist gut für Manschetten der aus der EP 0. 170.094 B2 bekannten Gattung, wobei das Bahnenmaterial Vlies, Kunststoffolie oder gewebeverstärkter Gummi ist.
In jedem Fall wird durch die Massenangleichung von Ausschnitt und Transponder eine Unwucht vermieden, die bei den für Glasfasern hohen Winkelgeschwindigkeiten der Manschette nicht zu verkraften wäre.

Der Transponderspeicher der individuellen Kennzeichnung der Manschette kann entweder als Festspeicher oder als beschreibbarer Speicher ausgeführt sein. Letzterer ermöglicht eine Änderung der Kennzeichnung.

Aus der CH 686.156 A5 ist ein "Datenträger zur Materialidentifizierung und zum materialbegleitendem Datentransport in der Textilindustrie" vorbekannt gewesen. Dieser maschinell lesbare Datenträger ist im Falle einer Spul-Hülse für Garn als Material eine integrierte Schaltung, nämlich ein Chip mit Antenne, die in die Hülsenwandung eingebettet sind, um Beschädigungen beim Hülsengebrauch auszuschließen. - Die Hülse ist aber kein Wickel aus mehreren Lagen, von denen eine innere einen Ausschnitt zur Einbettung Transponders hätte, und ohne Unwuchtkompensation.

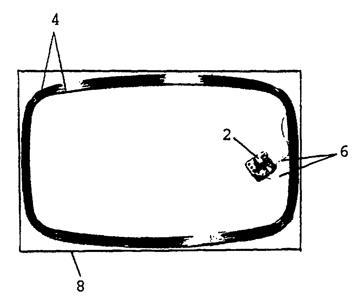

Im Folgenden ist die Erfindung anhand einer durch die Zeichnung beispielhaft dargestellten Ausführungsform der erfindungsgemäßen Manschette im einzelnen erläutert.
Die einzige Fig. der Zeichnung zeigt eine Draufsicht auf die erfindungsgemäß ausgebildete Kennzeichnungszone der Ausführungsform.

Im Ausführungsbeispiel besteht der in die Hülse eingebettete hitzebeständige Transponder hauptsächlich aus einem Microchip 2 und einer ovalen Spule 4 als Empfangs- und Sendeantenne, die mit dem Chip 2 in einer hier unsichtbaren flachen Folientasche fixiert gelagert sind, so daß die Verbindungsdrähte 6 zwischen Chip 2 und Spule 4 unbeschädigt bleiben. Dieser Transponder mit einer Dicke von ca. 0,5 mm und einer ungefähr rechteckigen Fläche von ca. 65 × 43 mm² ist ab jetzt im Handel und in einem ungefähr rechteckigen Ausschnitt 8 einer von mehreren Lagen je mindestens der Dicke des Transponders 2, 4, 6 passend untergebracht, welche zum Beispiel aus wendelförmig zur Manschette gewickelten Bahnen gebildet sind.

## Patentansprüche

1. Spul-Manschette, insbesondere zum Spinnspulen von Glasfasern; mit mehreren miteinander verbundenen, insbesondere gegenseitig verklebten, Lagen insbesondere aus Vlies-, Kunststoffolie- oder gewebeverstärkten Gummi-Bahnen, **dadurch gekennzeichnet, daß** eine innere Lage einen Ausschnitt (8) aufweist, in den ein entsprechend geformter Transponder (2, 4, 6) gebettet ist, dessen Masse wenigstens angenähert der Masse des ausgeschnittenen Bahnstückes gleicht.

2. Manschette nach Anspruch 1, **dadurch gekennzeichnet, daß** der Transponder (2, 4, 6) einen Microchip (2) und eine diesen einkreisende Ringspule (4) als Antenne aufweist, in deren Ebene der Chip (2) angeordnet ist; und daß diese Relativanordnung von Chip (2) und Spule (4) durch eine elektromagnetisch passive Folie gesichert ist, auf der zumindest der Chip (2) und die Verbindungsdrähte (6) zur Spule (4) liegen.

3. Manschette nach Anspruch 2, **gekennzeichnet durch** eine Doppel-Folie in Gestalt einer flachen Tasche, die am Rande unter Vakuum zugeschweißt ist und auch die Spule (4) einschließt.

4. Manschette nach Anspruch 3, **dadurch gekennzeichnet, daß** die Folientasche mittels eines Randstreifens derselben in dem Bahn-Ausschnitt (8) gehalten ist.

5. Manschette nach einem der Ansprüche 1 bis 4, **dadurch gekennzeichnet, daß** die ausgeschnittene Lage eine ungefähr mittlere ist und den Ausschnitt (8) in der Mitte zwischen ihren Randkanten aufweist.

## Claims

1. Spool sleeve, in particular for spinning bobbins of glassfibre, with several layers, which are connected together, particularly glued to one another, especially of fibrous web, synthetic material foil or fibre-reinforced rubber strips, **characterised in that** an inner layer has a cut-out (8) in which a correspondingly shaped transponder (2, 4, 6) is embedded, the mass of the transponder being at least approximately equal to the mass of the cut-out strip portion.

2. Sleeve according to claim 1, **characterised in that** the transponder (2, 4, 6) comprises a microchip (2) and a ring coil (4), which encircles this, as an antenna, the chip (2) being arranged in the plane of the coil, and that this relative arrangement of chip (2) and coil (4) is secured by an electromagnetically passive foil, on which at least the chip (2) and the connecting wires (6) to the coil (4) lie.

3. Sleeve according to claim 2, **characterised by** a double foil in the form of a flat pocket which is welded together at the edges under vacuum and also encloses the coil (4).

4. Sleeve according to claim 3, **characterised in that** the foil pocket is held by means of an edge strip thereof in the strip cut-out (8).

5. Sleeve according to one of claims 1 to 4, **characterised in that** the cut-out layer is approximately a centre one and has the cut-out (8) in the middle between its edges.

## Revendications

1. Manchette de bobinage, notamment pour le filage sur bobine de fibres de verre, comprenant plusieurs couches reliées entre elles, notamment collées mutuellement, notamment en bandes de non tissé, en bandes de feuilles de matière plastique ou en bandes de caoutchouc renforcées par du tissu, **caractérisée en ce qu'**une couche intérieure comporte une découpure (8), dans laquelle est incorporé un transpondeur (2, 4, 6) conformé en conséquence, dont la masse est au moins approximativement égale à la masse du morceau de bande découpé.

2. Manchette suivant la revendication 1, **caractérisée en ce que** le transpondeur (2, 4, 6) est une micropuce (2) et a comme antenne une bobine (4) annulaire qui l'encercle et dans le plan duquel est disposée la puce (2) ; et **en ce que** cette position relative de la puce (2) et de la bobine (4) est assurée par une feuille qui est passive du point de vue électromagnétique et sur laquelle se trouve au moins la puce (2) et les fils (6) de liaison allant à la bobine (4).

3. Manchette suivant la revendication 2, **caractérisée par** une feuille double sous la forme d'une poche plate qui est soudée sous vide au bord et qui enferme également la bobine (4).

4. Manchette suivant la revendication 3, **caractérisée en ce que** la poche en feuille est maintenue au moyen d'une bande marginale de celle-ci dans la découpure (8).

5. Manchette suivant l'une des revendications 1 à 4, **caractérisée en ce que** la couche découpée est à peu près la couche médiane et comporte la découpure (8) au milieu entre ses arêtes de bord.
